# EUROPEAN PATENT APPLICATION

(11) **EP 3 668 138 A1**
(43) Date of publication of application: **17.06.2020**
(21) Application number: 18844047.3
(22) Date of filing: 07.08.2018
(51) Int. Cl.: H04W 16/14, H04W 72/04

(54) **COMMUNICATION DEVICE AND COMMUNICATION METHOD**

(30) Priority: 08.08.2017 JP 2017153039
(71) Applicant: Sharp Kabushiki Kaisha, Sakai City, Osaka 590-8522 (JP)
(72) Inventor: TOMEBA, Hiromichi, Sakai City, Osaka 590-8522 (JP); YAMADA, Ryota, Sakai City, Osaka 590-8522 (JP)
(74) Representative: Müller Hoffmann & Partner
(86) International application number: PCT/JP2018/029617
(87) International publication number: WO 2019/031507

(57) **Abstract**

A communication apparatus according to the present invention is a communication apparatus for transmitting data using multiple frequency channels, the communication apparatus including: a transmitter configured to transmit a radio frame by using the multiple frequency channels; and a carrier sense unit configured to perform carrier sense using at least one of the multiple channels, wherein in a case that the transmitter transmits the radio frame without using the at least one of the multiple channels on which the carrier sense is performed, at least a result of the carrier sense by the carrier sense unit indicates an idle state.

## Description

### Technical Field

The present invention relates to a communication apparatus and a communication method.

This application claims priority to JP 2017-153039 filed on August 8, 2017, the contents of which are incorporated herein by reference.

### Background Art

Research and development activities related to the 5th generation mobile radio communication system (5G system) have been actively carried out, aiming to start commercial services around the year 2020. A vision recommendation on the standard system of the 5G system (International mobile telecommunication - 2020 and beyond: IMT-2020) was recently reported (see NPL 1) by the International Telecommunication Union Radio Communications Sector (ITU-R), which is an international standardization body.

Providing sufficient frequency resources is an important issue for the communication system to handle a surge in data traffic. Thus, it is one of targets of 5G to achieve ultra-high capacity communication using a frequency band higher than a frequency band used in Long Term Evolution (LTE).

However, in radio communication using high frequency bands, path loss is a problem. In order to compensate for path loss, beamforming based on a multiplicity of antennas is used as a promising technique (see NPL 2).

### Citation List

### Non Patent Literature

NPL 1: "IMT Vision - Framework and overall objectives of the future development of IMT for 2020 and beyond," Recommendation ITU-R M. 2083-0, Sept. 2015.
NPL 2: E. G. Larsson, O. Edfors, F. Tufvesson, and T. L. Marzetta, "Massive MIMO for next generation wireless system," IEEE Commun. Mag., vol. 52, no. 2, pp. 186-195, Feb. 2014.

### Summary of Invention

### Technical Problem

However, particularly in a communication system such as a cellular system which includes multiple base station apparatuses, the beamforming based on a number of antennas improves the desired transmit power, but disadvantageously stochastically generates strong interference signals due to beamforming.

In view of these circumstances, an object of the present invention is to provide a communication apparatus and a communication method that can control interference signals to improve frequency efficiency or throughput.

### Solution to Problem

To address the above-mentioned problem, a communication apparatus and a communication method according to an aspect of the present invention are configured as follows.
(1) Specifically, a communication apparatus according to an aspect of the present invention is a communication apparatus for transmitting data using multiple frequency channels, the communication apparatus including: a transmitter configured to transmit a radio frame by using the multiple frequency channels; and a carrier sense unit configured to perform carrier sense using at least one of the multiple channels, wherein in a case that the transmitter transmits the radio frame without using the at least one of the multiple channels on which the carrier sense is performed, at least a result of the carrier sense by the carrier sense unit indicates an idle state.
(2) According to an aspect of the present invention, in the communication apparatus described above in (1), the at least one of the multiple channels on which the carrier sense is performed is an LBT channel, and in a case that the carrier sense unit further determines that a channel other than the LBT channel is idle, the transmitter transmits the radio frame on the channel other than the LBT channel.
(3) According to an aspect of the present invention, in the communication apparatus described above in (2), in a case that the carrier sense unit determines that the LBT channel is busy, the transmitter does not transmit the radio frame on the channel other than the LBT channel regardless of whether the channel other than the LBT channel is idle or busy.
(4) According to an aspect of the present invention, in the communication apparatus described above in (1), the at least one of the multiple channels on which the carrier sense is performed is configured in advance.
(5) According to an aspect of the present invention, in the communication apparatus described above in (1), in a case that the transmitter transmits the radio frame on at least two of the multiple channels, the at least two of the multiple channels include the at least one of the multiple channels on which the carrier sense is performed.
(6) According to an aspect of the present invention, in the communication apparatus described above in (1), in a case that the transmitter does not transmit the radio frame on the at least one of the multiple channels on which the carrier sense is performed, the transmitter transmits a resource reservation signal on the at least one of the multiple channels on which the carrier sense is performed.
(7) According to an aspect of the present invention, in the communication apparatus described above in (1), the at least one of the multiple channels on which the carrier sense is performed is an LBT channel, and in a case that the carrier sense unit determines that the LBT channel is busy, and in a case that a channel other than the LBT channel is determined to be idle in the carrier sense with a maximum contention window size, the transmitter transmits the radio frame on the channel other than the LBT channel.
(8) According to an aspect of the present invention, in the communication apparatus described above in (1), the at least one of the multiple channels on which the carrier sense is performed is an LBT channel, the transmitter divides the multiple channels into multiple channel groups, each of the channel groups is configured with the LBT channel, and in a case that the transmitter transmits the radio frame by using a channel other than the LBT channel, the channel being included in the channel group, at least a result of the carrier sense by the carrier sense unit for the LBT channel indicates the idle state.
(9) According to an aspect of the present invention, in the communication apparatus described above in (1), the carrier sense unit reserves, by the carrier sense, a frequency channel of the multiple frequency channels for a prescribed period of time, and the prescribed period of time is shorter in a case that there is a possibility that the radio frame based on a second radio access technology other than a first radio access technology which the base station apparatus has is transmitted on at least one of the multiple channels, compared to a case that there is no possibility that the radio frame based on the second radio access technology is transmitted on the at least one of the multiple channels.
(10) According to an aspect of the present invention, in the communication apparatus described above in (1), a maximum value of a period of time during which the carrier sense is performed is larger in a case that there is a possibility that the radio frame based on a second radio access technology other than a first radio access technology which the base station apparatus has is transmitted on at least one of the multiple channels, compared to a case that there is no possibility that the radio frame based on the second radio access technology is transmitted on the at least one of the multiple channels.
(11) According to an aspect of the present invention, in the communication apparatus described above in (1), transmit power which the transmitter configures for the radio frame is lower in a case that there is a possibility that the radio frame based on a second radio access technology other than a first radio access technology which the base station apparatus has is transmitted on at least one of the multiple channels, compared to a case that there is no possibility that the radio frame based on the second radio access technology is transmitted on the at least one of the multiple channels.
(12) A communication method according to an aspect of the present invention is a communication method for a communication apparatus for transmitting data using multiple frequency channels, the communication method including the steps of: transmitting a radio frame by using the multiple frequency channels; and performing carrier sense using at least one of the multiple channels, wherein in a case that the step of transmitting the radio frame transmits the radio frame without using the at least one of the multiple channels on which the carrier sense is performed, at least a result of the carrier sense in the step of performing the carrier sense indicates an idle state.

### Advantageous Effects of Invention

According to the aspect of the present invention, possible interference between base station apparatuses can be efficiently controlled, and frequency efficiency or throughput can be improved.

### Brief Description of Drawings

FIG. 1 is a diagram illustrating an example of a communication system according to the present embodiment.
FIG. 2 is a block diagram illustrating an example of a configuration of a base station apparatus according to the present embodiment.
FIG. 3 is a block diagram illustrating an example of a configuration of a terminal apparatus according to the present embodiment.
FIG. 4 is a diagram illustrating an example of a communication system according to the present embodiment.
FIG. 5 is a diagram illustrating an example of a flowchart according to the present embodiment.
FIG. 6 is a diagram illustrating an example of a communication system according to the present embodiment.
FIG. 7 is a diagram illustrating an example of a state of signals according to the present embodiment.
FIG. 8 is a diagram illustrating the state of signals according to the present embodiment.

### Description of Embodiments

A communication system according to the present embodiment includes a base station apparatus (a transmitter, cells, a transmission point, a group of transmit antennas, a group of transmit antenna ports, component carriers, an eNodeB, a transmission point, a transmission and/or reception unit, a transmission panel, and an access point) and a terminal apparatus (a terminal, a mobile terminal, a reception point, a reception terminal, a receiver, a group of receive antennas, a group of receive antenna ports, a UE, a reception point, a reception panel, and a station). Furthermore, a base station apparatus connected to a terminal apparatus (base station apparatus that establishes a radio link with a terminal apparatus) is referred to as a serving cell.

The base station apparatus and the terminal apparatus in the present embodiment can communicate in a frequency band the use of which requires a license (licensed band) and/or in a frequency band the use of which requires no license (an unlicensed band).

According to the presents, "X/Y" includes the meaning of "X or Y". According to the present embodiments, "X/Y" includes the meaning of "X and Y". According to the present embodiments, "X/Y" includes the meaning of "X and/or Y".

### First Embodiment

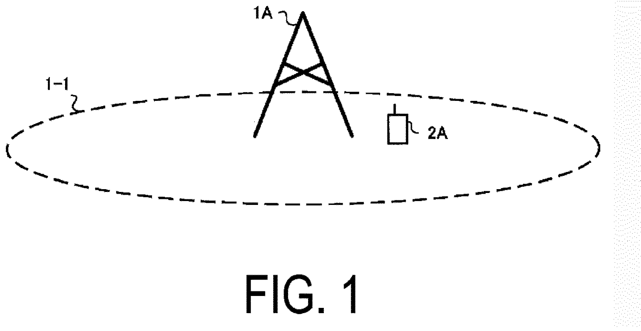

FIG. 1 is a diagram illustrating an example of a communication system according to the present embodiment. As illustrated in FIG. 1, the communication system according to the present embodiment includes a base station apparatus 1A and a terminal apparatus 2A. Coverage 1-1 is a range (a communication area) in which the base station apparatus 1A can connect to the terminal apparatus. The terminal apparatus 2A is also referred to as a terminal apparatus 2. The base station apparatus and the terminal apparatus are collectively referred to as a communication apparatus.

With respect to FIG. 1, the following uplink physical channels are used for uplink radio communication from the terminal apparatus 2A to the base station apparatus 1A. The uplink physical channels are used for transmitting information output from a higher layer.
- Physical Uplink Control Channel (PUCCH)
- Physical Uplink Shared Channel (PUSCH)
- Physical Random Access Channel (PRACH)

The PUCCH is used to transmit Uplink Control Information (UCI). The Uplink Control Information includes a positive ACKnowledgement (ACK) or a Negative ACKnowledgement (NACK) (ACK/NACK) for downlink data (a downlink transport block or a Downlink-Shared Channel (DL-SCH)). ACK/NACK for the downlink data is also referred to as HARQ-ACK or HARQ feedback.

Here, the Uplink Control Information includes Channel State Information (CSI) for the downlink. The Uplink Control Information includes a Scheduling Request (SR) used to request an Uplink-Shared Channel (UL-SCH) resource. The Channel State Information refers to a Rank Indicator (RI) for specifying a preferable spatial multiplexing number, a Precoding Matrix Indicator (PMI) for specifying a preferable precoder, a Channel Quality Indicator (CQI) for specifying a preferable transmission rate, a CSI-Reference Signal (RS) Resource Indicator (CRI) for specifying a preferable CSI-RS resource, and the like.

The Channel Quality Indicator CQI (hereinafter, referred to as a CQI value) can be a preferable modulation scheme (e.g., QPSK, 16QAM, 64QAM, 256QAM, or the like) and a preferable coding rate in a prescribed band (details of which will be described later). The CQI value can be an index (CQI Index) determined by the above-described modulation scheme, coding rate, and the like. The CQI value can take a value predetermined in the system.

The CRI indicates a CSI-RS resource included in multiple CSI-RS resources and having preferable received power/reception quality.

Note that the Rank Indicator and the Precoding Matrix Indicator can take values prescribed in the system. The Rank Indicator and the Precoding Matrix Indicator can be an index determined by the number of spatial multiplexing and Precoding Matrix information. Note that some or all of the CQI value, PMI value, RI value, and CRI value are also collectively referred to as the CSI value.

PUSCH is used for transmission of uplink data (an uplink transport block, UL-SCH). PUSCH may be used for transmission of ACK/NACK and/or Channel State Information along with the uplink data. PUSCH may be used to transmit the uplink control information only.

PUSCH is used to transmit an RRC message. The RRC message is a signal/information that is processed in a Radio Resource Control (RRC) layer. PUSCH is used to transmit a MAC Control Element (CE). Here, MAC CE is a signal/information that is processed (transmitted) in a Medium Access Control (MAC) layer.

For example, a power headroom may be included in MAC CE and may be reported via PUSCH. In other words, a MAC CE field may be used to indicate a level of the power headroom.

PRACH is used to transmit a random access preamble.

In the uplink radio communication, an UpLink Reference Signal (UL RS) is used as an uplink physical signal. The uplink physical signal is not used for transmission of information output from higher layers, but is used by the physical layer. The Uplink Reference Signal includes a DeModulation Reference Signal (DMRS) and a Sounding Reference Signal (SRS).

The DMRS is associated with transmission of the PUSCH or the PUCCH. For example, the base station apparatus 1A uses DMRS in order to perform channel compensation of PUSCH or PUCCH. The SRS is not associated with the transmission of the PUSCH or the PUCCH. For example, the base station apparatus 1A uses SRS to measure an uplink channel state.

In FIG. 1, the following downlink physical channels are used for the downlink radio communication from the base station apparatus 1A to the terminal apparatus 2A. The downlink physical channels are used for transmitting information output from the higher layer.
- Physical Broadcast Channel (PBCH)
- Physical Control Format Indicator Channel (PCFICH)
- Physical Hybrid automatic repeat request Indicator Channel (PHICH), HARQ indicator channel
- Physical Downlink Control Channel (PDCCH), downlink control channel
- Enhanced Physical Downlink Control Channel (EPDCCH)
- Physical Downlink Shared Channel (PDSCH), downlink shared channel

PBCH is used for broadcasting a Master Information Block (MIB, a Broadcast Channel (BCH)) that is shared by the terminal apparatuses. PCFICH is used for transmission of information for indicating a region (e.g., the number of Orthogonal Frequency Division Multiplexing (OFDM) symbols) to be used for transmission of PDCCH.

PHICH is used for transmission of ACK/NACK with respect to uplink data (a transport block, a codeword) received by the base station apparatus 1A. In other words, PHICH is used for transmission of a HARQ indicator (HARQ feedback) for indicating ACK/NACK with respect to the uplink data. Note that ACK/NACK is also called HARQ-ACK. The terminal apparatus 2A reports ACK/NACK having been received to a higher layer. ACK/NACK refers to ACK for indicating a successful reception, NACK for indicating an unsuccessful reception, and DTX for indicating that no corresponding data is present. In a case that PHICH for uplink data is not present, the terminal apparatus 2A reports ACK to a higher layer.

PDCCH and the EPDCCH are used to transmit Downlink Control Information (DCI). Here, multiple DCI formats are defined for transmission of the downlink control information. To be more specific, a field for the downlink control information is defined in a DCI format and is mapped to information bits.

For example, as a DCI format for the downlink, DCI format 1A to be used for the scheduling of one PDSCH in one cell (transmission of a single downlink transport block) is defined.

For example, the DCI format for the downlink includes downlink control information such as information of PDSCH resource allocation, information of a Modulation and Coding Scheme (MCS) for PDSCH, and a TPC command for PUCCH. Here, the DCI format for the downlink is also referred to as downlink grant (or downlink assignment).

For example, as a DCI format for the uplink, DCI format 0 to be used for the scheduling of one PUSCH in one cell (transmission of a single uplink transport block) is defined.

For example, the DCI format for the uplink includes uplink control information such as information of PUSCH resource allocation, information of MCS for PUSCH, and a TPC command for PUSCH. Here, the DCI format for the uplink is also referred to as uplink grant (or uplink assignment).

The DCI format for the uplink can also be used to request Channel State Information (CSI; also referred to as received quality information) for the downlink (CSI request).

The DCI format for the uplink can be used for a configuration for indicating an uplink resource to which a Channel State Information report (CSI feedback report) is mapped, the Channel State Information report being fed back to the base station apparatus by the terminal apparatus. For example, the Channel State Information report can be used for a configuration for indicating an uplink resource that periodically reports the Channel State Information (periodic CSI). The Channel State Information report can be used for a mode configuration (CSI report mode) for periodically reporting the Channel State Information.

For example, the Channel State Information report can be used for a configuration for indicating an uplink resource that reports aperiodic Channel State Information (aperiodic CSI). The Channel State Information report can be used for a mode configuration (CSI report mode) for aperiodically reporting the Channel State Information.

For example, the Channel State Information report can be used for a configuration for indicating an uplink resource that reports semi-persistent Channel State Information (semi-persistent CSI). The Channel State Information report can be used for a mode configuration (CSI report mode) for semi-persistently reporting the Channel State Information.

The DCI format for the uplink can be used for a configuration for indicating a type of the Channel State Information report that is fed back to the base station apparatus by the terminal apparatus. The type of the Channel State Information report includes wideband CSI (e.g., Wideband CQI), narrowband CSI (e.g., Subband CQI), and the like.

In a case where a PDSCH resource is scheduled in accordance with the downlink assignment, the terminal apparatus receives downlink data on the scheduled PDSCH. In a case where a PUSCH resource is scheduled in accordance with the uplink grant, the terminal apparatus transmits uplink data and/or uplink control information on the scheduled PUSCH.

PDSCH is used to transmit downlink data (a downlink transport block, DL-SCH). PDSCH is used to transmit a system information block type 1 message. The system information block type 1 message is cell-specific information.

PDSCH is used to transmit a system information message. The system information message includes a system information block X other than system information block type 1. The system information message is cell-specific information.

PDSCH is used to transmit an RRC message. Here, the RRC message transmitted from the base station apparatus may be shared by multiple terminal apparatuses in a cell. The RRC message transmitted from the base station apparatus 1A may be a dedicated message to a given terminal apparatus 2 (also referred to as dedicated signaling). In other words, user equipment specific information (unique to user equipment) is transmitted by using a message dedicated to the given terminal apparatus. PDSCH is used to transmit MAC CE.

Here, the RRC message and/or MAC CE is also referred to as higher layer signaling.

PDSCH can be used to request downlink channel state information. PDSCH can be used for transmission of an uplink resource to which a Channel State Information report (CSI feedback report) is mapped, the CSI feedback report being fed back to the base station apparatus by the terminal apparatus. For example, the Channel State Information report can be used for a configuration for indicating an uplink resource that periodically reports Channel State Information (periodic CSI). The Channel State Information report can be used for a mode configuration (CSI report mode) for periodically reporting the Channel State Information.

The type of the downlink Channel State Information report includes wideband CSI (e.g., Wideband CSI) and narrowband CSI (e.g., Subband CSI). The wideband CSI calculates one piece of Channel State Information for the system band of a cell. The narrowband CSI divides the system band in prescribed units, and calculates one piece of Channel State Information for each division.

In the downlink radio communication, a Synchronization signal (SS) and a DownLink Reference Signal (DL RS) are used as downlink physical signals. The downlink physical signals are not used for transmission of information output from the higher layers, but are used by the physical layer.

The synchronization signal is used for the terminal apparatus to take synchronization in the frequency domain and the time domain in the downlink. The Downlink Reference Signal is used for the terminal apparatus to perform channel compensation on a downlink physical channel. For example, the Downlink Reference Signal is used for the terminal apparatus to calculate the downlink Channel State Information.

Here, the Downlink Reference Signals include a Cell-specific Reference Signal (CRS), a UE-specific Reference Signal (URS), which is a terminal specific reference signal or terminal apparatus specific reference signal, relating to PDSCH, a DeModulation Reference Signal (DMRS) relating to EPDCCH, a Non-Zero Power Chanel State Information - Reference Signal (NZP CSI-RS), and a Zero Power Chanel State Information - Reference Signal (ZP CSI-RS).

CRS is transmitted in an entire band of a subframe and is used to perform demodulation of PBCH/PDCCH/PHICH/PCFICH/PDSCH. URS relating to PDSCH is transmitted in a subframe and a band that are used for transmission of PDSCH to which URS relates, and is used to demodulate PDSCH to which URS relates. Note that the URS associated with the PDSCH is also referred to as a DMRS or a downlink DMRS.

DMRS relating to EPDCCH is transmitted in a subframe and a band that are used for transmission of EPDCCH to which DMRS relates. DMRS is used to demodulate EPDCCH to which DMRS relates.

A resource for NZP CSI-RS is configured by the base station apparatus 1A. The terminal apparatus 2A performs signal measurement (channel measurement) by using NZP CSI-RS. NZP CSI-RS is used for beam recovery or the like performed in a case that beam sweeping for searching for a preferable beam direction or received power/reception quality in a beam direction is degraded. A resource for ZP CSI-RS is configured by the base station apparatus 1A. With zero output, the base station apparatus 1A transmits ZP CSI-RS. The terminal apparatus 2A performs interference measurement in a resource to which NZP CSI-RS corresponds, for example.

A Multimedia Broadcast multicast service Single Frequency Network (MBSFN) RS is transmitted in an entire band of the subframe used for transmitting PMCH.

MBSFN RS is used to demodulate PMCH. PMCH is transmitted through the antenna port used for transmission of MBSFN RS.

Here, the downlink physical channel and the downlink physical signal are also collectively referred to as a downlink signal. The uplink physical channel and the uplink physical signal are also collectively referred to as an uplink signal. The downlink physical channel and the uplink physical channel are collectively referred to as a physical channel. The downlink physical signal and the uplink physical signal are also collectively referred to as a physical signal.

BCH, UL-SCH, and DL-SCH are transport channels. Channels used in the Medium Access Control (MAC) layer are referred to as transport channels. A unit of the transport channel used in the MAC layer is also referred to as a Transport Block (TB) or a MAC Protocol Data Unit (PDU). The transport block is a unit of data that the MAC layer delivers to the physical layer. In the physical layer, the transport block is mapped to a codeword, and coding processing and the like are performed for each codeword.

Furthermore, for terminal apparatuses that supports Carrier Aggregation (CA), the base station apparatus can integrate multiple Component Carriers (CCs) for transmission in a broader band to perform communication. In carrier aggregation, one Primary Cell (PCell) and one or more Secondary Cells (SCells) are configured as a set of serving cells.

Furthermore, in Dual Connectivity (DC), a Master Cell Group (MCG) and a Secondary Cell Group (SCG) are configured as a group of serving cells. MCG includes a PCell and optionally one or more SCells. Furthermore, SCG includes a primary SCell (PSCell) and optionally one or more SCells.

The base station apparatus can communicate by using a radio frame. The radio frame includes multiple subframes (sub-periods). In a case that a frame length is expressed in time, for example, a radio frame length can be 10 milliseconds (ms), and a subframe length can be 1 ms. In this example, the radio frame includes 10 subframes.

The slot includes 7 or 14 OFDM symbols. The OFDM symbol length may vary depending on the subcarrier spacing, and thus the slot length may also be replaced with subcarrier spacing. The mini-slot may include the same number of OFDM symbols as that of the slots. The slot/mini-slot can be used as a scheduling unit. Note that the terminal apparatus can recognize a slot-based scheduling/mini-slot-based scheduling, based on the position (allocation) of the first downlink DMRS. In the slot-based scheduling, the first downlink DMRS is fixed at the third or fourth symbol in the slot. In the mins-slot-based scheduling, the first downlink DMRS is allocated at the first symbol in the scheduled data (resource).

The base station apparatus/terminal apparatus can communicate in a licensed band and/or an unlicensed band. For the base station apparatus/terminal apparatus, the licensed band is used as a PCell, and communication can be performed by using carrier aggregation and at least one SCell operating in the unlicensed band. The base station apparatus/terminal apparatus can communicate by using dual connectivity in which the master cell group communicates in the licensed band, whereas the secondary cell group communicates in the unlicensed band. The base station apparatus/terminal apparatus can communicate in the unlicensed band by using only the PCell. The base station apparatus/terminal apparatus can communicate only in the unlicensed band using CA or DC. Note that communication in which the licensed band is used as a PCell and in which cells (SCells, PSCells) of the unlicensed band are assisted by, for example, CA or DC is referred to as Licensed-Assisted Access (LAA). Communication of the base station apparatus/terminal apparatus only in the unlicensed band is also referred to as Unlicensed standalone access (ULSA). Communication of the base station apparatus/terminal apparatus only in the licensed band is also referred to as Licensed Access (LA).

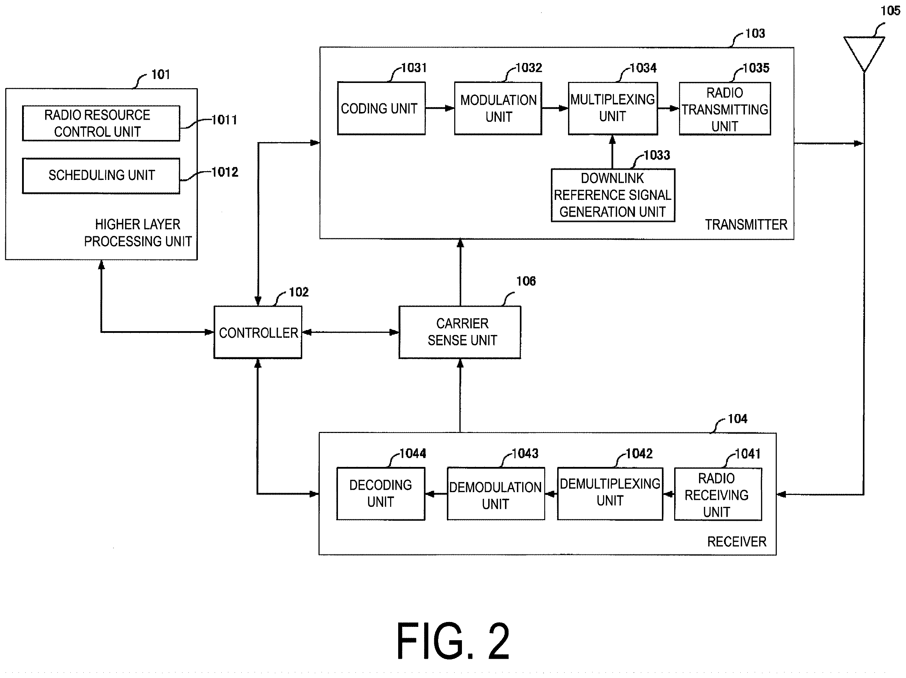

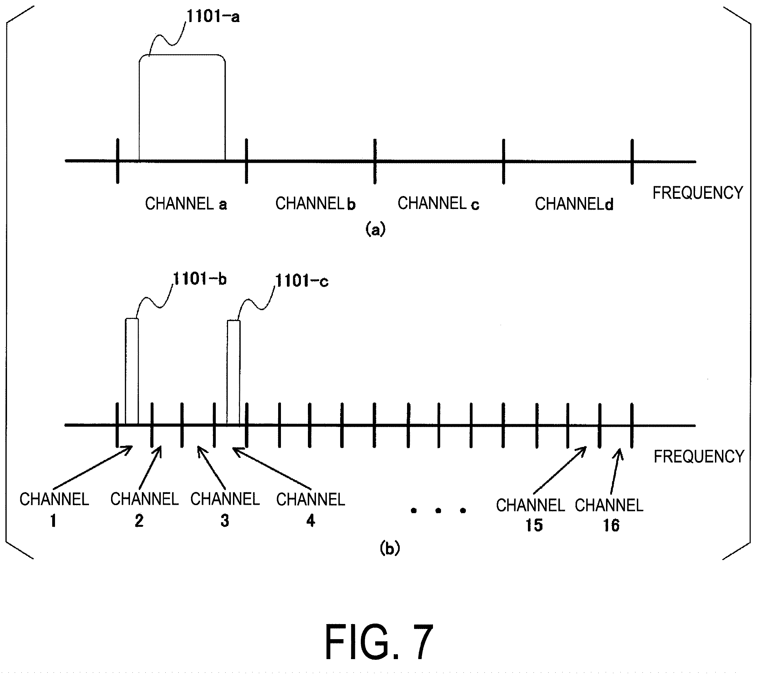

FIG. 2 is a schematic block diagram illustrating a configuration of the base station apparatus 1A according to the present embodiment. As illustrated in FIG. 7, the base station apparatus 1A includes a higher layer processing unit (higher layer processing step) 101, a controller (controlling step) 102, a transmitter (transmitting step) 103, a receiver (receiving step) 104, a transmit and/or receive antenna 105, and a carrier sense unit (carrier sense step) 106. The higher layer processing unit 101 is configured to include a radio resource control unit (radio resource controlling step) 1011 and a scheduling unit (scheduling step) 1012. The transmitter 103 is configured to include a coding unit (coding step) 1031, a modulation unit (modulating step) 1032, a downlink reference signal generation unit (downlink reference signal generating step) 1033, a multiplexing unit (multiplexing step) 1034, and a radio transmitting unit (radio transmitting step) 1035. The receiver 104 is configured to include a radio receiving unit (radio receiving step) 1041, a demultiplexing unit (demultiplexing step) 1042, a demodulation unit (demodulating step) 1043, and a decoding unit (decoding step) 1044.

The higher layer processing unit 101 performs processing of a Medium Access Control (MAC) layer, a Packet Data Convergence Protocol (PDCP) layer, a Radio Link Control (RLC) layer, and a Radio Resource Control (RRC) layer. Furthermore, the higher layer processing unit 101 generates information necessary for control of the transmitter 103 and the receiver 104, and outputs the generated information to the controller 102.

The higher layer processing unit 101 receives information of a terminal apparatus, such as a capability of the terminal apparatus (UE capability), from the terminal apparatus. To rephrase, the terminal apparatus transmits its function to the base station apparatus by higher layer signaling.

Note that in the following description, information of a terminal apparatus includes information for indicating whether the terminal apparatus supports a prescribed function, or information for indicating that the terminal apparatus has completed the introduction and test of a prescribed function. In the following description, information of whether the prescribed function is supported includes information of whether the introduction and test of the prescribed function have been completed.

For example, in a case that a terminal apparatus supports a prescribed function, the terminal apparatus transmits information (parameters) for indicating whether the prescribed function is supported. In a case where a terminal apparatus does not support a prescribed function, the terminal apparatus does not transmit information (parameters) for indicating whether the prescribed function is supported. In other words, whether the prescribed function is supported is reported by whether information (parameters) indicating whether the prescribed function is supported is transmitted. The information (parameters) indicating whether the prescribed function is supported may be reported using one bit of 1 or 0.

The radio resource control unit 1011 generates, or acquires from a higher node, the downlink data (the transport block) allocated in the downlink PDSCH, system information, the RRC message, the MAC Control Element (CE), and the like. The radio resource control unit 1011 outputs the downlink data to the transmitter 103, and outputs other information to the controller 102. Furthermore, the radio resource control unit 1011 manages various configuration information of the terminal apparatuses.

The scheduling unit 1012 determines a frequency and a subframe to which the physical channels (PDSCH and PUSCH) are allocated, the coding rate and modulation scheme (or MCS) for the physical channels (PDSCH and PUSCH), the transmit power, and the like. The scheduling unit 1012 outputs the determined information to the controller 102.

The scheduling unit 1012 generates information to be used for scheduling the physical channels (PDSCH and PUSCH), based on the result of the scheduling. The scheduling unit 1012 outputs the generated information to the controller 102.

Based on the information input from the higher layer processing unit 101, the controller 102 generates a control signal for controlling the transmitter 103 and the receiver 104. The controller 102 generates the downlink control information based on the information input from the higher layer processing unit 101, and outputs the generated information to the transmitter 103. In a case that transmission is needed after the carrier sense, the controller 102 controls the carrier sense unit 106 to perform carrier sense, and acquires a channel occupancy period (or channel transmission allowing time). After the carrier sense is successful, the controller 102 controls the transmitter 103 to transmit a resource reservation signal, a transmission signal, or the like.

The transmitter 103 generates the downlink reference signal in accordance with the control signal input from the controller 102, codes and modulates the HARQ indicator, the downlink control information, and the downlink data that are input from the higher layer processing unit 101, multiplexes PHICH, PDCCH, EPDCCH, PDSCH, and the downlink reference signal, and transmits a signal obtained through the multiplexing to the terminal apparatus 2 through the transmit and/or receive antenna 105.

The coding unit 1031 codes the HARQ indicator, the downlink control information, and the downlink data that are input from the higher layer processing unit 101, in compliance with a predetermined coding scheme, such as block coding, convolutional coding, and turbo coding, Low density parity check (LDPC) coding, or Polar coding, or in compliance with a coding scheme determined by the radio resource control unit 1011. The modulation unit 1032 modulates the coded bits input from the coding unit 1031, in compliance with the modulation scheme prescribed in advance, such as Binary Phase Shift Keying (BPSK), Quadrature Phase Shift Keying (QPSK), quadrature amplitude modulation (16QAM), 64QAM, or 256QAM, or in compliance with the modulation scheme determined by the radio resource control unit 1011.

The downlink reference signal generation unit 1033 generates, as the downlink reference signal, a sequence, known to the terminal apparatus 2A, that is determined in accordance with a rule predetermined based on the physical cell identity (PCI, cell ID) for identifying the base station apparatus 1A, and the like.

The multiplexing unit 1034 multiplexes the modulated modulation symbol of each channel, the generated downlink reference signal, and the downlink control information. To be more specific, the multiplexing unit 1034 maps the modulated modulation symbol of each channel, the generated downlink reference signal, and the downlink control information to the resource elements.

The radio transmitting unit 1035 performs Inverse Fast Fourier Transform (IFFT) on the modulation symbol resulting from the multiplexing or the like, generates an OFDM symbol, adds a Cyclic Prefix (CP) to the generated OFDM symbol, generates a baseband digital signal, converts the baseband digital signal into an analog signal, removes unnecessary frequency components through filtering, up-converts a result of the removal into a signal of a carrier frequency, performs power amplification, and outputs a final result to the transmit and/or receive antenna 105 for transmission.

In accordance with the control signal input from the controller 102, the receiver 104 demultiplexes, demodulates, and decodes the reception signal received from the terminal apparatus 2A through the transmit and/or receive antenna 105, and outputs information resulting from the decoding to the higher layer processing unit 101.

The radio receiving unit 1041 converts, by down-converting, an uplink signal received through the transmit and/or receive antenna 105 into a baseband signal, removes unnecessary frequency components, controls the amplification level in such a manner as to suitably maintain a signal level, performs orthogonal demodulation based on an in-phase component and an orthogonal component of the received signal, and converts the resulting orthogonally-demodulated analog signal into a digital signal.

The radio receiving unit 1041 removes a portion corresponding to CP from the digital signal resulting from the conversion. The radio receiving unit 1041 performs Fast Fourier Transform (FFT) of the signal from which the CP has been removed, extracts a signal in the frequency domain, and outputs the resulting signal to the demultiplexing unit 1042.

The demultiplexing unit 1042 demultiplexes the signal input from the radio receiving unit 1041 into signals such as PUCCH, PUSCH, and uplink reference signal. The demultiplexing is performed based on radio resource allocation information, included in the uplink grant notified to each of the terminal apparatuses 2, that is predetermined by the base station apparatus 1A by using the radio resource control unit 1011.

Furthermore, the demultiplexing unit 1042 performs channel compensation for PUCCH and PUSCH. The demultiplexing unit 1042 demultiplexes the uplink reference signal.

The demodulation unit 1043 performs Inverse Discrete Fourier Transform (IDFT) of PUSCH, acquires modulation symbols, and demodulates, for each of the modulation symbols of PUCCH and PUSCH, a reception signal in compliance with a predetermined modulation scheme, such as BPSK, QPSK, 16QAM, 64QAM, and 256QAM, or in compliance with a modulation scheme that the base station apparatus 1A notified to each of the terminal apparatuses 2 in advance by using the uplink grant.

The decoding unit 1044 decodes the coded bits of PUCCH and PUSCH that have been demodulated, at a coding rate, in compliance with a predetermined coding scheme, that is predetermined or notified from the base station apparatus 1A to the terminal apparatus 2 in advance by using the uplink grant, and outputs the decoded uplink data and uplink control information to the higher layer processing unit 101. In a case where PUSCH is retransmitted, the decoding unit 1044 performs the decoding by using the coded bits that is input from the higher layer processing unit 101 and retained in an HARQ buffer, and the demodulated coded bits.

The carrier sense unit 106 performs carrier sense and acquires a channel occupation time (or channel transmission allowing time).

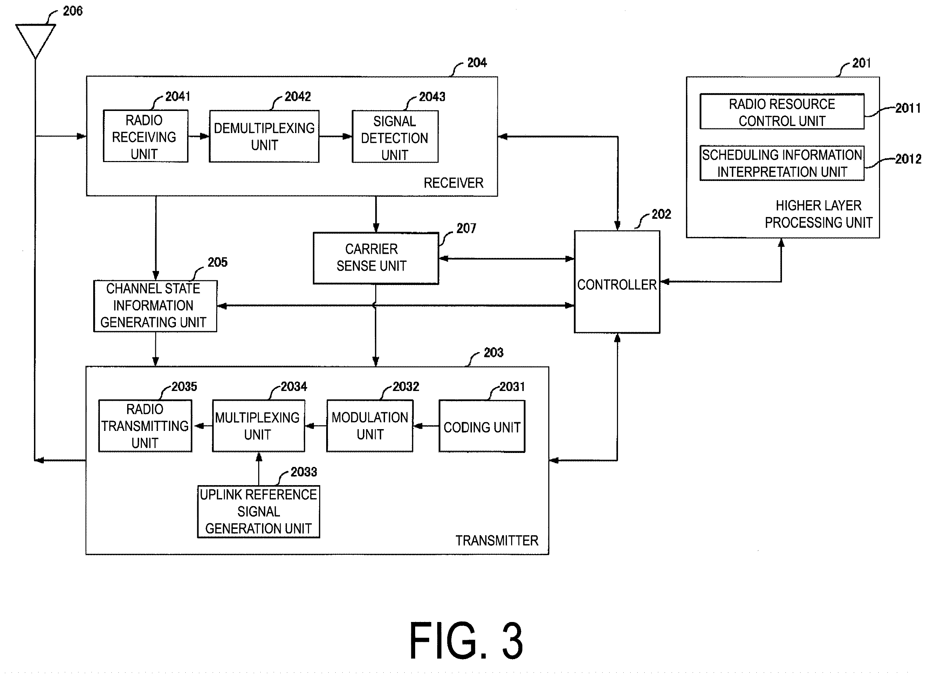

FIG. 3 is a schematic block diagram illustrating a configuration of the terminal apparatus 2 according to the present embodiment. As illustrated in FIG. 7, the terminal apparatus 2A includes a higher layer processing unit (higher layer processing step) 201, a controller (controlling step) 202, a transmitter (transmitting step) 203, a receiver (receiving step) 204, a channel state information generation unit (channel state information generating step) 205, a transmit and/or receive antenna 206, and a carrier sense unit (carrier sense step) 207. The higher layer processing unit 201 is configured to include a radio resource control unit (radio resource controlling stop) 2011 and a scheduling information interpretation unit (scheduling information interpreting step) 2012. The transmitter 203 is configured to include a coding unit (coding step) 2031, a modulation unit (modulating step) 2032, an uplink reference signal generation unit (uplink reference signal generating step) 2033, a multiplexing unit (multiplexing step) 2034, and a radio transmitting unit (radio transmitting step) 2035. The receiver 204 is configured to include a radio receiving unit (radio receiving step) 2041, a demultiplexing unit (demultiplexing step) 2042, and a signal detection unit (signal detecting step) 2043.

The higher layer processing unit 201 outputs, to the transmitter 203, the uplink data (the transport block) generated by a user operation or the like. The higher layer processing unit 201 performs processing of the Medium Access Control (MAC) layer, the Packet Data Convergence Protocol (PDCP) layer, the Radio Link Control (RLC) layer, and the Radio Resource Control (RRC) layer.

The higher layer processing unit 201 outputs, to the transmitter 203, information for indicating a terminal apparatus function supported by the terminal apparatus 2A.

Furthermore, the radio resource control unit 2011 manages various configuration information of the terminal apparatuses 2A. Furthermore, the radio resource control unit 2011 generates information to be mapped to each uplink channel, and outputs the generated information to the transmitter 203.

The radio resource control unit 2011 acquires configuration information of CSI feedback transmitted from the base station apparatus, and outputs the acquired information to the controller 202.

The radio resource control unit 2011 acquires information for carrier sense in the unlicensed band transmitted from the base station apparatus, and outputs the acquired information to the controller 202.

The scheduling information interpretation unit 2012 interprets the downlink control information received through the receiver 204, and determines scheduling information. The scheduling information interpretation unit 2012 generates control information in order to control the receiver 204 and the transmitter 203 in accordance with the scheduling information, and outputs the generated information to the controller 202.

Based on the information input from the higher layer processing unit 201, the controller 202 generates a control signal for controlling the receiver 204, the channel state information generation unit 205, and the transmitter 203. The controller 202 outputs the generated control signal to the receiver 204, the channel state information generation unit 205, and the transmitter 203 to control the receiver 204 and the transmitter 203.

The controller 202 controls the transmitter 203 to transmit CSI generated by the channel state information generation unit 205 to the base station apparatus.

In a case that transmission is needed after the carrier sense, the controller 202 controls the carrier sense unit 207. The controller 202 calculates an energy detection threshold value from the transmit power, bandwidth, and the like, and outputs the calculated energy detection threshold value to the carrier sense unit 207.

In accordance with the control signal input from the controller 202, the receiver 204 demultiplexes, demodulates, and decodes a reception signal received from the base station apparatus 1A through the transmit and/or receive antenna 206, and outputs the resulting information to the higher layer processing unit 201.

The radio receiving unit 2041 converts, by down-converting, a downlink signal received through the transmit and/or receive antenna 206 into a baseband signal, removes unnecessary frequency components, controls the amplification level in such a manner as to suitably maintain a signal level, performs orthogonal demodulation based on an in-phase component and an orthogonal component of the received signal, and converts the resulting orthogonally-demodulated analog signal into a digital signal.

The radio receiving unit 2041 removes a portion corresponding to CP from the digital signal resulting from the conversion, performs fast Fourier transform of the signal from which the CP has been removed, and extracts a signal in the frequency domain.

The demultiplexing unit 2042 demultiplexes the extracted signal into PHICH, PDCCH, EPDCCH, PDSCH, and the downlink reference signal. Furthermore, the demultiplexing unit 2042 performs channel compensation for PHICH, PDCCH, and EPDCCH based on a channel estimation value of a desired signal obtained from channel measurement, detects downlink control information, and outputs the detected downlink control information to the controller 202. The controller 202 outputs PDSCH and the channel estimation value of the desired signal to the signal detection unit 2043.

The signal detection unit 2043, by using PDSCH and the channel estimation value, detects a signal, and outputs the detected signal to the higher layer processing unit 201.

The transmitter 203 generates an uplink reference signal in accordance with the control signal input from the controller 202, codes and modulates the uplink data (the transport block) input from the higher layer processing unit 201, multiplexes PUCCH, PUSCH, and the generated uplink reference signal, and transmits a signal resulting from the multiplexing to the base station apparatus 1A through the transmit and/or receive antenna 206.

The coding unit 2031 codes the uplink control information or uplink data input from the higher layer processing unit 201 in compliance with a coding scheme such as convolutional coding, block coding, turbo coding, LDPC coding, Polar coding, or the like.

The modulation unit 2032 modulates the coded bits input from the coding unit 2031, in compliance with a modulation scheme, such as BPSK, QPSK, 16QAM, or 64QAM, that is notified by using the downlink control information, or in compliance with a modulation scheme predetermined for each channel.

The uplink reference signal generation unit 2033 generates a sequence that is determined according to a predetermined rule (formula), based on a Physical Cell Identity (PCI, also referred to as a cell ID or the like) for identifying the base station apparatus 1A, a bandwidth in which the uplink reference signal is mapped, a cyclic shift notified by using the uplink grant, a parameter value for generation of a DMRS sequence, and the like.

The multiplexing unit 2034 multiplexes PUCCH and PUSCH signals and the generated uplink reference signal for each transmit antenna port. To be more specific, the multiplexing unit 2034 maps the PUCCH and PUSCH signals and the generated uplink reference signal to resource elements for each transmit antenna port.

The radio transmitting unit 2035 performs Inverse Fast Fourier Transform (IFFT) on a signal resulting from the multiplexing, performs OFDM modulation, generates an OFDMA symbol, adds CP to the generated OFDMA symbol, generates a baseband digital signal, converts the baseband digital signal into an analog signal, removes unnecessary frequency components, up-converts a result of the removal into a signal of a carrier frequency, performs power amplification, and outputs a final result to the transmit and/or receive antenna 206 for transmission.

The carrier sense unit 207 performs carrier sense by using an energy detection threshold value or the like, and acquires a channel occupation time (or channel transmission allowing time).

Note that the terminal apparatus 2 can perform modulation according to not only the OFDMA scheme but also the SC-FDMA scheme.

In a case that ultra-high capacity communication such as ultra-high definition video transmission is required, ultra-wideband transmission utilizing high frequency bands is desired. Transmission in a high frequency band needs to compensate for path loss, and beamforming is important. In an environment in which multiple terminal apparatuses exist in a limited area, in a case that ultra-high capacity communication is required for each terminal apparatus, an ultra-dense network with base station apparatuses densely deployed is effective. However, in a case that base station apparatuses are densely deployed, the Signal to Noise power ratio (SNR) is greatly improved, although strong interference may be caused by beamforming. Accordingly, interference control (avoidance, suppression) in consideration of beamforming is required to achieve ultra-high capacity communication for every terminal apparatus in the limited area.

For example, coordinated (cooperative) interference control among base station apparatuses is effective. The interference can be controlled by a centralized control station that can control multiple base station apparatuses by appropriately controlling radio resources (time, frequency, or spatial layer) for or the beam direction of each base station apparatus. However, disadvantageously, a significantly increased complexity of interference control results from an increased number of base station apparatuses managed by the centralized control station, such as in an ultra-dense network. Thus, with no centralized control station or with no complex operation despite the presence of a centralized control station, a technique enabling interference control is desired.

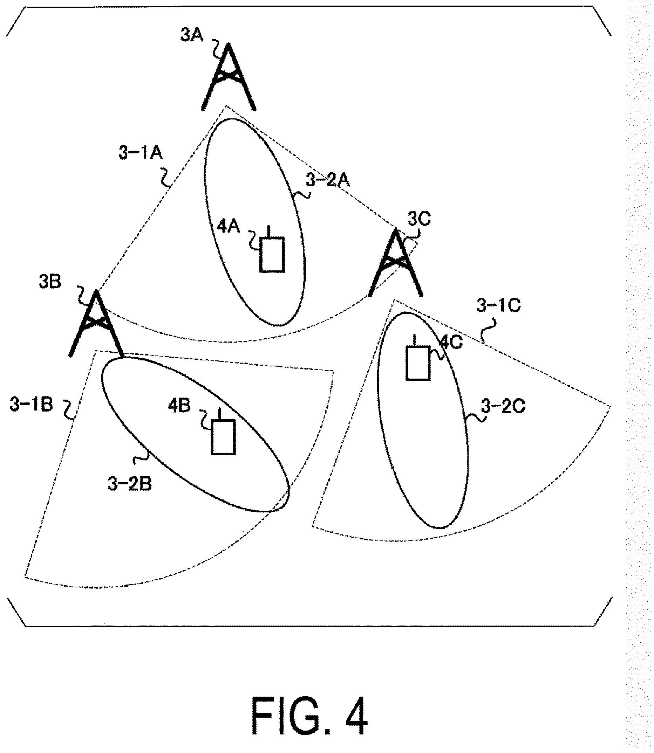

In the present embodiment, an example will be described in which each base station apparatus performs autonomous and dispersive interference control. FIG. 4 is a diagram illustrating an example of a communication system according to the present embodiment. The communication system illustrated in FIG. 4 includes base station apparatuses 3A, 3B, and 3C, and terminal apparatuses 4A, 4B, and 4C. 3-1A, 3-1B, and 3-1C illustrate ranges of carrier sense observed by the base station apparatuses 3A, 3B, and 3C, respectively. 3-2A, 3-2B, and 3-2C illustrate beamforming transmitted to the terminal apparatuses 4A, 4B, and 4C by the base station apparatuses 3A, 3B, and 3C, respectively. Each base station apparatus observes interference signals (radio resource usage condition) from neighboring base station apparatuses/terminal apparatuses/communication apparatuses, and transmits signals in a range or direction where interference from or to the surroundings is weak. Each base station apparatus performs Listen Before Talk (LBT) to evaluate, by carrier (channel) sense before transmission, whether other communication apparatuses are communicating (whether the other communication apparatuses are idle or busy). Note that a problem to be solved by the present embodiment is interference caused by beamforming and that carrier sense is thus performed in consideration of the beamforming. In a case that carrier sense is successful with a signal observed (received) at a certain beam width, a transmission period can be acquired only within the range of the beam width. Note that the beam width is the width of a main beam (main lobe) and is, for example, an angular width (half width) corresponding to a 3 dB decrease in gain from the maximum value of the beam gain (antenna gain). Note that the beam width includes the direction of the main beam. Beamforming with a certain beam width may be defined (specified). For example, the definition is that the following value satisfies a criterion: a difference (ratio) between the maximum beam gain outside the beam width and the maximum beam gain of side lobes outside the beam width or the maximum beam gain within the beam width. Furthermore, the definition is that the following value satisfies a criterion: a difference (ratio) between the beam gain within the beam width and the beam gain of a side lobe (or back lobe) located in an angular direction at least a prescribed angle away from the angle corresponding to a 3 dB decrease from the maximum beam gain in a direction opposite to the direction of the maximum beam gain. Accordingly, the base station apparatuses can perform beamforming with reduced interference affecting one another. Note that the base station apparatus/terminal apparatus in the present embodiment can communicate in the licensed band or the unlicensed band. Note that a beam width at which carrier sense is successful is also referred to as an acquisition beam width. Note that the acquisition beam width includes the direction of the main beam with the beam width at which carrier sense is successful. Note that there is desirably reciprocity (correspondence) between a receive beam and a transmit beam. Accordingly, carrier sense in consideration of beamforming may be performed in a case that there is reciprocity (correspondence) between the receive beam and the transmit beam.

The base station apparatus can transmit data signals, or the like, at a smaller beam width, provided that the beam width is equal to or smaller than the acquisition beam width. In other words, the base station apparatus is prevented from performing transmission by beamforming with the main beam directed to the outside of the acquisition beam width. A preferable beam direction may be searched for by beam sweeping. Thus, the desired signal power can be increased with interference reduced, thus enabling an increase in throughput. Note that, in general, beamforming may result in generation of side lobes outside of the acquisition beam width. Accordingly, beamforming allowed within the acquisition beam width may be defined (specified). The definition (specification) is, for example, that the following value satisfies a criterion: a difference (ratio) between the maximum beam gain outside the acquisition beam width and the maximum beam gain of side lobes outside the acquisition beam width or the maximum beam gain within the acquisition beam width.

In communication in the unlicensed band, in a case that carrier sense is successful with the determination that the channel is idle, the base station apparatus/terminal apparatus can occupy the channel for a certain period of time. The maximum period of time (channel occupancy period) during which the channel can be occupied is referred to as a Maximum Channel Occupancy Time (MCOT). The MCOT varies depending on the priority of data. The priority of data can be expressed in a priority class (channel access priority class). The priority class is indicated by 1, 2, 3, and 4 in order of decreasing priority. The maximum value of a random period of time required for LBT may also vary depending on the priority class. Note that the random period of time is the product of a random positive integer and a slot period (e.g., 9 microseconds) that is equal to or shorter than a contention window. A random positive integer equal to or smaller than the contention window size (CWS) is also referred to as a counter for carrier sense (LBT). The CWS may vary depending on the priority class, a transmission error rate, and the like. In a case that the observed (detected) power is lower than the energy detection threshold value for at least a prescribed period of time (e.g., 4 microseconds) during the slot period, the slot period is considered idle. Otherwise, the slot period is considered busy. Then, the carrier sense is considered successful in a case that a counter number of slots are idle. Note that the slot period may vary depending on the frequency band (frequency bandwidth, carrier frequency) and that the slot period can be shorter in a higher frequency band. The period of time determined to be idle/busy in slot units may vary depending on the frequency band (frequency bandwidth, carrier frequency). In other words, a higher frequency band allows the period during which the observed (detected) power is lower than the energy detection threshold value to be shortened in a case that the period is determined to be idle.

Note that, in the licensed band, the slot period may be expressed in terms of a time unit ts based on sampling intervals or the number of OFDM symbols. In a case that the subcarrier spacings are represented as SCSs and the FFT size is represented as NFFT, ts = 1/(SCS × NFFT). For example, the slot period is expressed as 1 OFDM symbol or 256 ts. Note that, in a case that the slot period is expressed in the number of OFDM symbols, fractions may be used, for example, 0.25 OFDM symbols and 0.5 OFDM symbols. Note that the OFDM symbol length and ts are based on the subcarrier spacings and hence the subcarrier spacings used to express the slot period may be fixed. The slot period may vary according to the frequency band (frequency bandwidth or carrier frequency), and thus the subcarrier spacings used to express the slot period may vary for each frequency band. For a shorter slot period in a higher frequency band, the subcarrier spacings used to express the slot period increase consistently with frequency band.

In communication in the licensed band, operation similar to that in the unlicensed band is possible. However, the channel need not necessarily be occupied after LBT. In the licensed band, some communication apparatuses may be allowed to communicate simultaneously in order to maintain flexibility. Accordingly, in the licensed band, a period of time (channel transmission allowing period) can be acquired for which the right for transmission on the channel is granted by LBT. The maximum value of the channel transmission allowing period is also referred to as a Maximum allowing transmission time (MATT). Note that the channel occupancy period and the channel transmission allowing period are collectively referred to as a transmission period.

The base station apparatus can use, during carrier sense, the energy detection threshold value to determine whether other communication apparatuses are communicating or not. The base station apparatus can configure the energy detection threshold value to be smaller than or equal to the maximum energy detection threshold value. Beamforming can obtain beam gain, and thus, given beamforming, the beam gain can be taken into account for the energy detection threshold value. For example, an offset value X dB resulting from beamforming can be a difference between the gain of the main beam and the gain of the side lobes. In this case, the energy detection threshold value increased by X dB corresponds to an energy detection threshold value for which the beam gain is taken into account. Increasing the energy detection threshold value increases the probability of successful carrier sense. However, the beamforming reduces the area in which interference may occur, making interference power less likely to increase significantly. Note that, in a case that no beamforming is assumed or the beam pattern is omni-directional, X is 0 dB. Note that the maximum value configured for offset value X dB resulting from beamforming can vary depending on the frequency band (frequency bandwidth, carrier frequency) in which the base station apparatus 1A communicates. The offset value X dB resulting from beamforming may also be calculated, based on Equivalent isotopically radiated power (EIRP) including the transmit power of the base station apparatus 1A. Whether the base station apparatus 1A configures the offset value X dB resulting from beamforming, based on the antenna gain or EIRP may be determined by the frequency band (frequency bandwidth, carrier frequency) in which the base station apparatus 1A communicates.

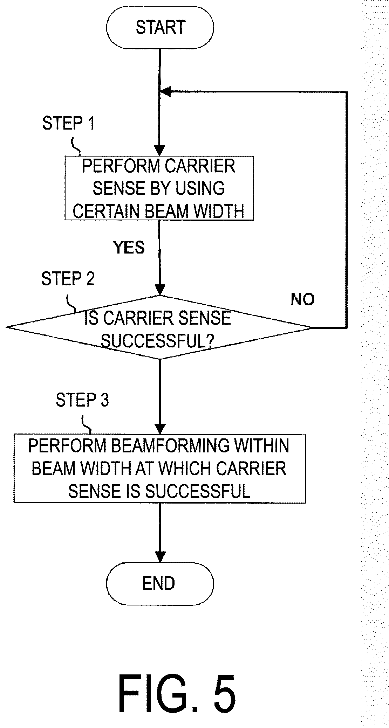

FIG. 5 is a simplified flowchart according to the present embodiment. The base station apparatus receives (observes) a surrounding communication status in a receive beam with a beam width and beam direction, and the carrier sense unit 106 performs carrier sense using the received signal (observation signal) (step 1). The carrier sense unit 106 determines whether the carrier sense is successful (step 2). In a case that carrier sense is unsuccessful (NO in step 2), the process returns to step 1, and the carrier sense unit 106 performs carrier sense using another beam width or beam direction. In a case that carrier sense is successful (YES in step 2), the transmitter 103 performs transmission through beamforming within the acquisition beam width.

The beam gain is increased in a case that transmission is performed at a much narrower beam width within the acquisition beam width. In this case, aligned beam directions lead to strong interference. Thus, the maximum value of the beam gain used for transmission is shared among (specified for) the base station apparatuses. This can avoid generation of significantly strong interference signals. Instead of the maximum value of the beam gain shared (specified) among the base station apparatuses, the maximum value of the sum of the beam gain and the transmit power may be shared (specified). This favorably increases the beam gain but correspondingly reduces the transmit power, allowing avoidance of generation of significantly strong interference signals. Note that the sum of the beam gain and the transmit power may be the EIRP described above.

Note that a wide acquisition beam width leads to a reduced probability of acquiring a transmission period and that a narrow acquisition beam width leads to easy acquisition of a transmission period but a reduced probability of the presence of a terminal apparatus within the acquisition beam width. Efficient operation requires a beam width preferable for carrier sense. The beam width may be determined by a factor such as the number or density of the base station apparatuses. It is efficient to reduce the beam width with increasing the number or density of the base station apparatuses and to increase the beam width with decreasing the number or density of the base station apparatuses. Thus, the centralized control station can transmit, to the base station apparatuses, the number or density of surrounding base station apparatuses. Alternatively, the base station apparatus includes a mechanism for sharing, among the base station apparatuses, the number or density of the surrounding base station apparatuses. In this case, the base station apparatus can determine a preferable beam width according to the number or density of the surrounding base station apparatuses. The number or density of the surrounding base station apparatuses may be used to specify the maximum acquirable beam width. The base station apparatus may also specify the maximum acquirable beam width, based on the period of beam switching (or the maximum period of time within which beam switching needs to be completed). The base station apparatus may also specify the maximum acquirable beam width, based on whether there is any possibility that a signal based on a communication scheme other than the communication scheme configured in the base station apparatus itself is present in a frequency channel through which the base station apparatus communicates.

Although the base station apparatus can perform transmission at the preferable beam width within the acquisition beam width, an interference reduction effect is not achieved in a case that the neighboring base station apparatus does not know the acquisition beam width. Thus, a beam width acquired by a certain base station apparatus needs to be known by the neighboring base station apparatus. By using carrier sense, the base station apparatus can broadcast, to the surrounding base station apparatuses, control information including some or all of the acquisition beam width, the direction of the maximum gain value of the acquisition beam width, and the channel occupancy period/channel transmission allowing period. In this case, the neighboring base station apparatus can receive the control information and perform carrier sense in favor of a beam direction that is likely to be unoccupied, and this improves efficiency. The base station apparatus may transmit a resource reservation signal at a beam width within the acquisition beam width that is other than the beam width at which data signals are transmitted. Carrier sense is not successful in the beam direction in which the resource reservation signal is transmitted, and the neighboring base station apparatus is prevented from using the direction.

Note that the interference control based on carrier sense taking into account the beamforming described above has been described with reference to the base station apparatus. However, one aspect of the present invention is not limited to this configuration, and the interference control can be applied to the terminal apparatus as well.

In a case that beamforming is performed on each terminal apparatus within the acquisition beam width, a preferable beam direction can be searched for by beam sweeping. For example, the synchronization signal or CSI-RS is used for the beam sweeping. The synchronization signal is transmitted in units of synchronization signal blocks (SS blocks). The SS block includes a Primary Synchronization Signal (PSS), a Secondary Synchronization Signal (SSS), and PBCH. Up to two SS blocks are included in one slot. Multiple SS blocks can be allocated in a timing range (window) of 5 ms, for example. The timing range (window) is also referred to as a synchronization signal occasion (SS occasion). The timing range (window) is periodically transmitted. The maximum number of SS blocks that can be allocated within the timing range (window) may vary depending on subcarrier spacing. The position of the timing range (window) and/or the position of the SS block within the timing range (window) is indicated by the DMRS and/or PBCH. The position of the timing range (window) is indicated by, for example, a radio frame number (System frame number (SFN)) indicating the number of a radio frame. The period of the timing range (window) is indicated by higher layer signaling from the base station apparatus. The position of the 5-ms range (window) in the SCell may be indicated by the higher layer signal from the base station apparatus. In a case that multiple SS blocks allocated within the timing range (window) are applied with beamforming and transmitted in different beam directions and the SS blocks providing preferable received power/reception quality are reported from the terminal apparatus, the base station apparatus can recognize the beam direction preferable for the terminal apparatus. To indicate the SS blocks providing the preferable received power/reception quality, the terminal apparatus may report the indexes of the SS blocks or transmit a random access preamble using radio resources corresponding to the SS blocks providing the preferable reception power/reception quality to the base station apparatus.

Note that, in the interference control based on carrier sense described above, the synchronization signal may be transmitted in the licensed band without carrier sense, whereas carrier sense is required in the unlicensed band. A failure in carrier sense may preclude the synchronization signal from being transmitted at the desired timing. In this case, the base station apparatus may skip transmission of SS blocks outside the channel occupancy period.

In a case that only SS blocks are transmitted and that the channel occupancy period is equal to or shorter than a criterion (e.g., 1 ms), the base station apparatus can transmit the SS blocks after a fixed period of LBT (e.g. 25 microseconds or 8 microseconds). In a case that the channel occupancy period is longer than the criterion (e.g., 1 ms), the base station apparatus can transmit the SS blocks after a random period of LBT. Note that the criteria for the fixed period and channel occupancy period described above can be configured with different values depending on the frequency band in which the base station apparatus communicates. For example, the base station apparatus may configure the criteria for the fixed period and channel occupancy period, which vary between a 5-GHz frequency band and a 60-GHz frequency band. The criteria for the fixed period and channel occupancy period configured for each frequency band are not limited to specific values, but configuration of lower criteria for the fixed period and the channel occupancy period preferably results from a higher frequency. The criteria for the fixed period and the channel occupancy period can be configured by using the same formula for each frequency band. For example, in a case that a prescribed frame period is designated as A and the slot period is designated as B, the fixed period can be expressed by a formula A + B or A + 2 × B, and the values of A and B can be configured with values varying with frequency band. The base station apparatus 1A can also perform LBT during a period of time in which the SS blocks within the timing range (window) are not transmitted. The criteria for the fixed period and the channel occupancy period can be configured, based on the subcarrier spacings of the signals transmitted by the base station apparatus 1A.

### Second Embodiment

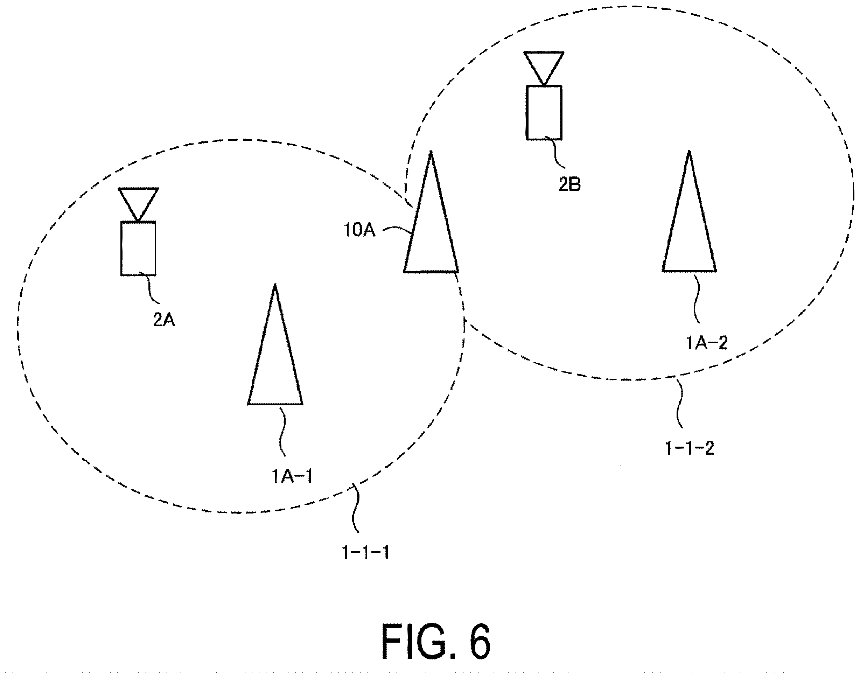

FIG. 6 is a schematic diagram illustrating an example of a communication system according to the present embodiment. As illustrated in FIG. 6, the communication system according to the present embodiment includes at least a base station apparatus 1A-1, a base station apparatus 1A-2, and a base station apparatus 10A. Here, the base station apparatus 1A-1 and the base station apparatus 1A-2 at least include the same functions and may thus hereinafter collectively be referred to as the base station apparatus 1A. The base station apparatus 10A includes a second radio access technology (second RAT) different from a first radio access technology (first RAT) included in the base station apparatus 1A. Both the first RAT and the second RAT can be configured in the unlicensed band. The first RAT includes LAA in which a cell in the licensed band is assisted by CA, DC, etc. for communication. The first RAT includes a communication scheme in which at least some of the radio parameters (frame structure and channel configuration) configured for the licensed band are configured for the unlicensed band. The second RAT includes a wireless LAN, and includes, for example, IEEE802.11ac and IEEE802.11ad standards, and associated standards thereof (IEEE802.11ax, IEEE802.11ay, and IEEE802.11ba). The base station apparatus 1A and the base station apparatus base station apparatus 10A can perform carrier sense or LBT or Clear channel assessment (CCA) for determining whether a wireless medium is idle or busy before performing signal transmission.

The first RAT and second RAT can be configured with different channelizations. FIG. 7 is a schematic diagram illustrating an example of the channelization according to the present embodiment. For example, the second RAT can be configured with a total of four channels (carriers or cells) as illustrated in FIG. 7(a). By selecting one of the four channels illustrated in FIG. 7(a) and performing LBT on the channel, the base station apparatus 10A configured with the second RAT can reserve (acquire) the channel during a prescribed period of time and transmit signals (radio frames, signal frames, or frames).

On the other hand, as illustrated in FIG. 7(b), the first RAT is configured with channelization with the bandwidth of one channel configured with a value different from the corresponding value in the second RAT in the same frequency band. According to the example in FIG. 7(b), in the first RAT, a total of 16 channels (carriers) can be configured all over the bandwidth over which the channels of the second RAT are configured. By selecting one of the 16 channels illustrated in FIG. 7(b) and performing LBT on the channel, the base station apparatus 1A configured with the first RAT to reserve (acquire) the channel during the prescribed period of time and transmit the signals. Of course, the channelization in the first RAT is not limited to the example in FIG. 7(b), but the bandwidth per channel specified in the channelization in the first RAT can be configured to be smaller than the bandwidth per channel specified in the channelization in the second RAT. That is, in the present embodiment, the first RAT and the second RAT can be expressed as RATs that are different from each other in bandwidth per channel specified in the channelization, and the bandwidth per channel in the first RAT is smaller than the bandwidth per channel in the second RAT.

The communication system according to the present embodiment includes the base station apparatus 1A and the base station apparatus 10A. Now, consider a case in which the communication system includes multiple base station apparatuses 1A. Here, the multiple base station apparatuses 1A included in the communication system are referred to as the base station apparatus 1A-1 and the base station apparatus 1A-2. The base station apparatus 1A-1 and the base station apparatus 1A-2 can select one of the 16 channels illustrated in FIG. 7(b) and communicate on the channel.

Here, consider a case that the base station apparatus 1A-1 selects channel 1 illustrated in FIG. 7(b) and communicates on channel and that the base station apparatus 1A-2 selects channel 4 illustrated in FIG. 7(b) and communicates on the channel. In this case, since the base station apparatus 1A-1 and the base station apparatus 1A-2 select the different channels, signals from the base station apparatus 1A-1 and the base station apparatus 1A-2 are not detected by LBT performed by the respective carrier sense units. In other words, the base station apparatus 1A-1 can communicate even in a case that the base station apparatus 1A-2 is in communication. Here, consider a case in which the base station apparatus 10A selects channel a illustrated in FIG. 7(a). The base station apparatus 10A performs LBT on channel a selected by the base station apparatus 10A itself, and can thus reserve (acquire) channel a during the prescribed period of time only in a case that neither of the base station apparatus 1A-1 and the base station apparatus 1A-2 are in communication. On the other hand, the base station apparatus 1A-1 and the base station apparatus 1A-2 can respectively select channel 1 and channel 4 and communicate on the channels in a case that the base station apparatus 10A is not in communication. In other words, the acquisition rate at which the base station apparatus 10A can acquire the transmission right is significantly reduced compared to the acquisition rate for the base station apparatus 1A-1 and the base station apparatus 1A-2.

Thus, the base station apparatus 1A according to the present embodiment configures (fixes) the same channel as a channel on which LBT is performed. With reference to FIG. 7(a) as an example, the base station apparatus 1A-1 and the base station apparatus 1A-2 configure channel 1 as a channel on which LBT is performed (hereinafter referred to as an LBT channel, an LBT cell, a primary channel, a secondary primary cell, or the like). In a case that the wireless medium can be determined to be idle on the LBT channel, the base station apparatus 1A-1 and the base station apparatus 1A-2 can secure (acquire) the wireless medium during the prescribed period of time. The wireless medium can be a channel other than the LBT channel. Note that, in addition to the LBT channel, the base station apparatus 1A-1 and the base station apparatus 1A-2 can perform LBT on channels other than the LBT channel.

The LBT channel can be configured by the base station apparatus 1A. However, the channel configured as the LBT channel is suitably shared between the base station apparatus 1A-1 and the base station apparatus 1A-2. Thus, for the base station apparatus 1A, the channel configured as the LBT channel is specified (configured) in advance.

In a case of determining the LBT channel to be busy, the base station apparatus 1A-1 does not transmit radio frames by using the channel determined to be idle even in a case that any radio channel other than the LBT channel can be determined to be idle. In other words, in a case of determining the LBT channel to be busy, the base station apparatus 1A-1 is prevented from ensuring (acquiring) a channel other than the LBT channel during the prescribed period of time even in a case that any radio channel other than the LBT channel is idle.

The base station apparatus 1A-1 can group multiple frequency channels on which the base station apparatus 1A-1 can communicate. According to the example in FIG. 7(a), the base station apparatus 1A-1 can group channels 1 to 4 into one group (channel group). The base station apparatus 1A-1 can configure, as the LBT channel, one of multiple channels included in one group. In a case of transmitting radio frames, the base station apparatus 1A-1 first selects a channel group. The base station apparatus 1A-1 can reserve (acquire) the wireless medium during the prescribed period of time by performing carrier sense on a channel in the channel group configured as the LBT channel. Note that, in a case of determining the LBT channel to be busy, the base station apparatus 1A-1 is prevented from ensuring (acquiring) any of the channels in the channel group including the LBT channel during the prescribed period of time.

The base station apparatus 1A can group multiple channels in association with the channelization configured for the base station apparatus 10A. With reference to FIG. 7(a) as an example, the base station apparatus 1A can group channels 1 to 4 included in the frequency band of channel a into one group.

The base station apparatus 1A can perform LBT on channels other than the LBT channel. For example, the base station apparatus 1A-1 can perform LBT on each of channel 1 configured as the LBT channel and channel 2 not configured as the LBT channel, and in a case of determining that the wireless medium can be ensured on both channels, simultaneously use channel 1 and channel 2 for communication. This means that, in a case that the base station apparatus 1A according to the present embodiment transmits radio frames using multiple channels, the LBT channel is included in the multiple channels.

Note that the base station apparatus 1A-1 can perform LBT on each of channel 1 configured as the LBT channel and channel 2 not configured as the LBT channel, and in a case of determining that the wireless medium can be ensured on both channels, communicate using only channel 2. However, in this case, the base station apparatus 1A-2 may determine the LBT channel to be idle in a case that the base station apparatus 1A-1 is in communication by using channel 2. Thus, the base station apparatus 1A-1 can transmit, through channel 1, signals (a first resource securing signal, a first resource securing signal, and a first resource reservation signal) indicating that channel 1 is reserved during the prescribed period of time. The first resource reservation signal is preferably a signal that can be demodulated by the base station apparatus 1A-2. In a case that the first resource reservation signal includes information indicating the prescribed period of time reserved by the base station apparatus 1A-1, the base station apparatus 1A-1 need not necessarily continue to transmit the first resource reservation signal during the prescribed period of time, and it is sufficient that the first resource reservation signal is transmitted at the leading portion of the prescribed period of time. In a case that the first resource reservation signal is a signal precluded from being demodulated by the base station apparatus 1A-2, the base station apparatus 1A-1 preferably continues to transmit the first resource reservation signal during the prescribed period of time.

The base station apparatus 1A-1 can describe, in the first resource reservation signal transmitted through the LBT channel, information indicating the prescribed period of time reserved by the base station apparatus 1A-1. At this time, the information indicating the prescribed period of time is desirably allocated in a region where other base station apparatuses and/or terminal apparatuses can demodulate the information (e.g., a Common search space of PDCCH, or the like.). At this time, in a case that the first resource reservation signal can be acquired by LBT on the LBT channel, the base station apparatus 1A-2 may reserve, on the LBT channel, a prescribed period of time (MCOT) for which an end time point of the prescribed period of time (MCOT) indicated by the first resource reservation signal is an upper limit. This is limited to a case where the base station apparatus 1A-2 can acquire only the first resource reservation signal by LBT and where the period in which the first resource reservation signal occupies the LBT channel is equal to or shorter than the MCOT. In other words, the base station apparatus 1A-1 and the base station apparatus 1A-2 can reserve the MCOT on the LBT channel by LBT during the MCOT period reserved on the LBT channel by an apparatus that is different from the base station apparatus 1A-1 and the base station apparatus 1A-2 and is configured with the same radio access technology by using the first resource reservation signal.

The base station apparatus 1A-1 can transmit a signal with a comb-teeth-shaped frequency spectrum to the LBT channel as the first resource reservation signal. In this case, the base station apparatus 1A-2 can transmit the signal frame using the frequency at which the base station apparatus 1A-1 is not transmitting the first resource reservation signal.

In a case that the base station apparatus 1A-1 configuring no LBT channel, the base station apparatus 1A-1 can reduce the length of the period of time (MCOT) that can be reserved by LBT. In a case that the base station apparatus 1A-1 recognizes that the base station apparatus 10A using the second RAT may use, for communication, at least a part of a channel configured as a channel used for communication by the base station apparatus 1A-1, the base station apparatus 1A-1 can configure the MCOT to be shorter than in a case where there is no possibility that the base station apparatus 10A uses the channel. Such configuration allows mitigation of inequality of the transmission right acquisition rate between the base station apparatus 10A and the other base station apparatuses. Note that the foregoing can be similarly performed in a case that the base station apparatus 1A-1 configures the LBT channel.

In a case of recognizing that the base station apparatus 1A-1 recognizes that the base station apparatus 10A using the second RAT may use, for communication, at least a part of the channel configured as the channel used for communication by the base station apparatus 1A-1, the base station apparatus 1A-1 can make the transmit power lower than in a case where there is no possibility that the base station apparatus 10A uses the channel. Such configuration allows mitigation of inequality of the transmission right acquisition rate between the base station apparatus 10A and the other base station apparatuses.

In a case that the base station apparatus 1A-1 recognizes that the base station apparatus 10A using the second RAT may use, for communication, at least a part of the channel configured as the channel used for communication by the base station apparatus 1A-1, the base station apparatus 1A-1 can reserve, in a case of determining the LBT channel to be busy, a channel other than the LBT channel during the prescribed period of time and communicate through the channel by performing, on the channel other than the LBT channel, LBT the period of which is configured to be longer than the LBT performed on the LBT channel. The base station apparatus 1A-1 can use, as a counter, the maximum value of candidate values for the CWS used for LBT in order to configure a long LBT period.

According to the method described above, in the communication system in which multiple base station apparatuses are present that use the RATs with different bandwidths per channel in the unlicensed band, the base station apparatuses can equally acquire communication opportunities. Accordingly, frequency efficiency is improved. Third Embodiment

The base station apparatus 1A according to the present embodiment performs LBT in the unlicensed band to reserve the wireless medium for the prescribed period of time and communicate using the wireless medium. The base station apparatus 1A selects one channel from the channels configured in advance in accordance with the channelization, and performs LBT on the channel. Here, in a case that the bandwidth (channel bandwidth) in which the base station apparatus 1A performs LBT is different from the bandwidth (signal bandwidth, occupied bandwidth) of the signal transmitted by the base station apparatus 1A and that the signal bandwidth is smaller than the channel bandwidth, the base station apparatus 1A does not use a part of the wireless medium reserved by LBT, leading to reduced frequency efficiency.

The base station apparatus 1A according to the present embodiment can transmit a signal for performing synchronization processing and/or beam sweeping between the base station apparatus 1A and the terminal apparatus. After performing LBT in the unlicensed band, the base station apparatus 1A can transmit SS blocks including the synchronization signal and broadcast information. The base station apparatus 1A can perform the beam sweeping processing on the terminal apparatus by transmitting SS blocks multiple times in a prescribed period of time. However, in a case that the occupied bandwidth of the SS blocks is smaller than the channel bandwidth, the reduced frequency efficiency described above may occur. Note that the signal for performing synchronization processing and/or beam sweeping which signal is transmitted by the base station apparatus 1A is not limited to the SS blocks and includes, for example, a signal corresponding to the SS blocks from which the broadcast information is removed, a signal including multiple synchronization signal sequences, and the like.

Thus, the base station apparatus 1A according to the present embodiment can change the channel bandwidth in which LBT is performed, between a case in which the signal transmitted during the MCOT reserved by LBT includes only SS blocks and a case in which the signal transmitted during the MCOT reserved by LBT includes two signals: a signal with SS blocks and a signal that is other than SS blocks and that has a larger occupied bandwidth than the SS blocks.

In a case that the signal transmitted during the MCOT includes only SS blocks, the base station apparatus 1A according to the present embodiment can perform LBT in a bandwidth included in the channel bandwidth and occupied by the SS blocks. Such control allows the base station apparatus 1A to reserve, by LBT, the wireless medium only in the bandwidth required to transmit the SS block, thus allowing avoidance of reduced frequency efficiency.

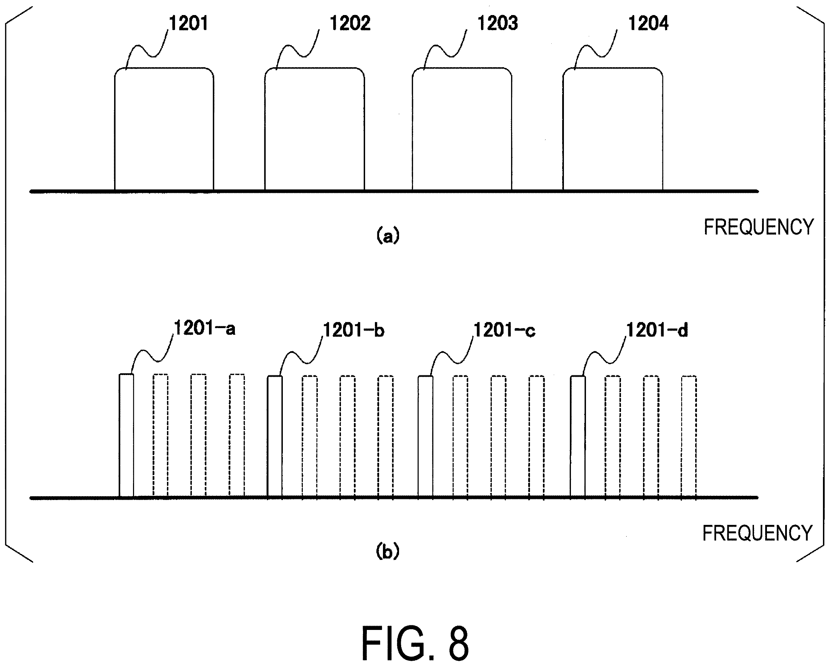

In a case that the base station apparatus needs to match the channel bandwidth with the bandwidth over which LBT is performed, the base station apparatus can transmit multiple SS blocks allocated in the frequency direction in order to effectively utilize the bandwidth reserved by LBT. FIG. 8 is a schematic diagram illustrating an example of signal allocation according to the present embodiment. For example, the base station apparatus 1A can allocate multiple SS blocks in the frequency direction as illustrated in FIG. 8(a). Hereinafter, a method for allocating SS blocks as illustrated in FIG. 8(a) is also referred to as Localized allocation. As illustrated in FIG. 8(a), the base station apparatus 1A can allocate multiple SS blocks at given frequency intervals within the channel bandwidth.

The base station apparatus 1A can perform, as beamforming, analog beamforming and digital beamforming. The base station apparatus 1A performs digital-to-analog conversion (DAC) to convert, into an analog signal, a digital signal resulting from digital signal processing. The analog beamforming refers to beamforming performed by processing (e.g., phase adjustment by a phase shifter) on the analog signal resulting from DAC. The digital beamforming refers to beamforming performed by processing (e.g., amplitude and phase adjustment by precoding) on the digital signal before performing DAC. The base station apparatus 1A can perform beamforming differently for each of the multiple SS blocks allocated in the channel bandwidth in accordance with the localized allocation, and transmit the resulting SS blocks. For example, in a case that the base station apparatus 1A includes two subarrays, the base station apparatus 1A can transmit a SS block from each subarray at a different frequency (subcarrier, radio resource) with beamforming configured differently. However, in a case of transmitting each of the SS blocks with beamforming configured differently, the base station apparatus 1A needs to make a difference in transmission start time between the SS blocks equal to or shorter than a prescribed period of time. Here, the beamforming differently configured means a case of different antenna gains or beam widths, a case of different phase rotation amounts in the analog beamforming, a case of a difference in transmit power in the analog beamforming, a case of different transmission weights in the digital beamforming, a case of different antenna ports used (antenna panels, subarrays), a case of a difference of whether to simultaneously use the analog beamforming and the digital beamforming or to use only one of the analog beamforming and the digital beamforming, and the like.

In a case of needing to match the channel bandwidth and the bandwidth over which LBT is performed, the base station apparatus 1A can transmit the SS blocks allocated in a comb teeth shape in the frequency direction. For example, as illustrated in FIG. 8(b), the base station apparatus 1A may divide the SS blocks and allocate the divided SS blocks at given frequency intervals. Hereinafter, a method for allocating SS blocks as illustrated in FIG. 8(b) is also referred to as Distributed allocation. In the distributed allocation, the SS blocks can include a comb-teeth-shaped frequency spectrum. However, the frequency bandwidth of each comb tooth and the interval between the teeth of the comb are not limited, but can be expressed in integral multiple values of or values 0.5 times as large as the bandwidth and the subcarrier spacing of resource blocks. For the base station apparatus 1A, one SS block may be a signal with a comb-teeth-shaped frequency spectrum, or multiple SS blocks may constitute a signal with a comb-teeth-shaped frequency spectrum.

Note that the base station apparatus 1A can transmit dummy signals simultaneously with the SS blocks. The dummy signals can be, for example, reference signals. In this case, the dummy signals are preferably distributedly allocated all over the occupied bandwidth.

In a case that the SS blocks are distributedly allocated, the base station apparatus 1A can select, from multiple frequency candidates, a frequency at which the allocation of the SS blocks is started. According to the example in FIG. 8(b), four frequency candidates for SS blocks that can be distributedly allocated by the base station apparatus 1A are present, and thus the base station apparatus 1A can select one of the frequency candidates and transmit the SS blocks at the selected frequency. The base station apparatus 1A can configure information indicating the frequency (or the index of the frequency) at which the allocation of the SS blocks is started or the allocation of the SS blocks, in association with information indicating the base station apparatus 1A (for example, a cell ID). Alternatively, the base station apparatus 1A can transmit the SS blocks including the information indicating the frequency (or the index of the frequency) at which the allocation of the SS blocks is started or the allocation of the SS blocks. For example, the broadcast channel includes the information indicating the frequency (or the index of the frequency) at which the allocation of the SS blocks is started or the allocation of the SS blocks. By reading the frequency at which the allocation of the received SS blocks is started, the terminal apparatus can acquire the information associated with information indicating the base station apparatus 1A having transmitted the SS blocks. Alternatively, the terminal apparatus can recognize, from the broadcast channel of the received SS blocks, the frequencies at which the SS blocks are allocated.

The base station apparatus 1A can transmit radio frames to the terminal apparatus by CA using the licensed band (first frequency band) and the unlicensed band (second frequency band) simultaneously. In this case, the base station apparatus 1A can configure different frame structures for the radio frames transmitted in the licensed band and for the radio frames transmitted in the unlicensed band. In this case, synchronization signals configured by the base station apparatus 1A for the radio frames transmitted in the licensed band differ, in frame structure (allocation position, signal waveform, or signal spectrum shape), from synchronization signals configured by the base station apparatus 1A for the radio frames transmitted in the unlicensed band. For example, the base station apparatus 1A can configure the localized allocation for the synchronization signals transmitted in the licensed band (in this case, multiple synchronization signals need not necessarily be allocated in the frequency direction) and configure the distributed allocation for the synchronization signals transmitted in the unlicensed band. This is because the base station apparatus 1A need not perform LBT in the licensed band.

The base station apparatus 1A need not necessarily perform the beam sweeping during the MCOT reserved by LBT. In other words, the base station apparatus 1A may skip transmission of the SS blocks depending on the temporal position of the MCOT reserved by LBT. In this case, the base station apparatus 1A transmits only the data signals during the MCOT reserved by LBT.

In a case of transmitting only the data signals during the MCOT reserved by LBT, the base station apparatus 1A preferably allocates the data signals all over the frequency band reserved by LBT. However, there is a possibility that, depending on the amount of traffic of data provided by the base station apparatus 1A and addressed to the terminal apparatus, the base station apparatus 1A may be precluded from allocating the data signals all over the frequency band reserved by LBT.

In this case, the base station apparatus 1A can allocate other signals in the frequency band reserved by LBT, in addition to the data signals. For example, the base station apparatus 1A can allocate signals including information indicating that the unlicensed band has been reserved by LBT, in a part of the frequency band reserved by LBT in which no data signals addressed to the terminal apparatus are allocated. For example, the base station apparatus 1A can repeatedly allocate, in the frequency direction, the data signals addressed to the terminal apparatus and transmit the allocated data signals.

In a case of transmitting both the SS blocks and the data signals during the MCOT reserved by LBT, the base station apparatus 1A needs to perform LBT at least in the frequency band of the larger bandwidth of the occupied bandwidths of the SS block blocks and the data signals. For example, in a case that the occupied bandwidth of the data signals is larger than the occupied bandwidth of the SS blocks, the base station apparatus 1A performs LBT in the occupied bandwidth of the data signals, and thus, the frequency bandwidth over which LBT is performed is larger than the occupied bandwidth of the SS blocks. In this case, as described above, the base station apparatus 1A can allocate, in accordance with the localized or distributed allocation, the SS blocks in the frequency band in which LBT is performed, and transmit the allocated SS blocks.

In a case that the channel bandwidth in which the base station apparatus 1A performs carrier sense matches with the frequency bandwidth in which the base station apparatus 1A can allocate PDSCHs and that the amount of traffic provided by the base station apparatus 1A is smaller than the amount of traffic that can occupy a prescribed rate of the frequency bandwidth in which the PDSCHs can be allocated, the base station apparatus 1A can allocate dummy signals in the regions of the PDSCHs where data traffic is not allocated. Note that the base station apparatus 1A can transmit, as dummy signals, a signal transmitted to perform the beam sweeping processing between the base station apparatus 1A and the terminal apparatus, a prescribed reference signal, and a resource reservation signal (reservation signal). Each of the dummy signals may include a comb-teeth-shaped frequency spectrum, and in this case, the base station apparatus 1A can always transmit the dummy signal including the comb-teeth-shaped frequency spectrum. The base station apparatus 1A can notify the terminal apparatus that the dummy signals are transmitted. Such control enables the terminal apparatus to demodulate the signals while excluding the dummy signals, thus allowing communication quality to be improved.

Note that the SS block is desirably allocated starting at the start position of the MCOT, but no limitation is imposed on the time positions where the base station apparatus 1A-1 according to the present embodiment allocates the SS blocks.

According to the method described above, the configuration of the SS blocks transmitted by the base station apparatus 1A according to the present embodiment can vary between the transmission in the licensed band and the transmission in the unlicensed band.

According to the method described above, the base station apparatus 1A according to the present embodiment can efficiently utilize the frequency band reserved by LBT.

### Common to All Embodiments

Note that the frequency band used by the apparatuses according to the present embodiment (base station apparatus and terminal apparatus) is not limited to the licensed band or unlicensed bands described heretofore. The frequency band to which the present embodiment is directed includes a frequency band referred to as a white band (white space) and that is actually out of use, for example, in order to prevent interference between frequencies in spite of allowing from nation or region for usage of a specific service (for example, a frequency band that is out of use in some regions though the frequency band has been allocated for television broadcasting), and a shared frequency band expected to be shared among multiple operators in the future (license shared band) although the frequency band exclusively allocated for a specific operator before. This means that the apparatuses according to the present embodiment can communicate by considering the white band and the license shared band to be unlicensed bands.

A program running on an apparatus according to an aspect of the present invention may serve as a program that controls a Central Processing Unit (CPU) and the like to cause a computer to function in such a manner as to realize the functions of the embodiment according to the aspect of the present invention. Programs or the information handled by the programs are temporarily stored in a volatile memory such as a Random Access Memory (RAM), a non-volatile memory such as a flash memory, a Hard Disk Drive (HDD), or any other storage device system.

Note that a program for realizing the functions of the embodiment according to an aspect of the present invention may be recorded in a computer-readable recording medium. This configuration may be realized by causing a computer system to read the program recorded on the recording medium for execution. It is assumed that the "computer system" refers to a computer system built into the apparatuses, and the computer system includes an operating system and hardware components such as a peripheral device. Furthermore, the "computer-readable recording medium" may be any of a semiconductor recording medium, an optical recording medium, a magnetic recording medium, a medium dynamically retaining the program for a short time, or any other computer readable recording medium.

Furthermore, each functional block or various characteristics of the apparatuses used in the above-described embodiment may be implemented or performed on an electric circuit, for example, an integrated circuit or multiple integrated circuits. An electric circuit designed to perform the functions described in the present specification may include a general-purpose processor, a Digital Signal Processor (DSP), an Application Specific Integrated Circuit (ASIC), a Field Programmable Gate Array (FPGA), or other programmable logic devices, discrete gates or transistor logic, discrete hardware components, or a combination thereof. The general-purpose processor may be a microprocessor or may be a processor of known type, a controller, a micro-controller, or a state machine instead. The above-mentioned electric circuit may include a digital circuit, or may include an analog circuit. Furthermore, in a case that with advances in semiconductor technology, a circuit integration technology appears that replaces the present integrated circuits, it is also possible to use a new integrated circuit based on the technology according to one or more aspects of the present invention.

Note that the invention of the present patent application is not limited to the above-described embodiments. In the embodiment, apparatuses have been described as an example, but the invention of the present application is not limited to these apparatuses, and is applicable to a terminal apparatus or a communication apparatus of a fixed-type or a stationary-type electronic apparatus installed indoors or outdoors, for example, an AV apparatus, a kitchen apparatus, a cleaning or washing machine, an air-conditioning apparatus, office equipment, a vending machine, and other household apparatuses.

The embodiments of the present invention have been described in detail above referring to the drawings, but the specific configuration is not limited to the embodiments and includes, for example, an amendment to a design that falls within the scope that does not depart from the gist of the present invention. Furthermore, various modifications are possible within the scope of one aspect of the present invention defined by claims, and embodiments that are made by suitably combining technical means disclosed according to the different embodiments are also included in the technical scope of the present invention. Furthermore, a configuration in which constituent elements, described in the respective embodiments and having mutually the same effects, are substituted for one another is also included in the technical scope of the present invention.

### Industrial Applicability

One aspect of the present invention is preferably used for a base station apparatus and a communication method. An aspect of the present invention can be utilized, for example, in a communication system, communication equipment (for example, a cellular phone apparatus, a base station apparatus, a wireless LAN apparatus, or a sensor device), an integrated circuit (for example, a communication chip), or a program.

### Reference Signs List

- 1A, 3A, 3B, 3C: Base station apparatus
- 2A, 4A, 4B, 4C: Terminal apparatus
- 101: Higher layer processing unit
- 102: Controller
- 103: Transmitter
- 104: Receiver
- 105: Transmit and/or receive antenna
- 106: Carrier sense unit
- 1011: Radio resource control unit
- 1012: Scheduling unit
- 1031: Coding unit
- 1032: Modulation unit
- 1033: Downlink reference signal generation unit
- 1034: Multiplexing unit
- 1035: Radio transmitting unit
- 1041: Radio receiving unit
- 1042: Demultiplexing unit
- 1043: Demodulation unit
- 1044: Decoding unit
- 201: Higher layer processing unit
- 202: Controller
- 203: Transmitter
- 204: Receiver
- 205: Channel state information generation unit
- 206: Transmit and/or receive antenna
- 207: Carrier sense unit
- 2011: Radio resource control unit
- 2012: Scheduling information interpretation unit
- 2031: Coding unit
- 2032: Modulation unit
- 2033: Uplink reference signal generation unit
- 2034: Multiplexing unit
- 2035: Radio transmitting unit
- 2041: Radio receiving unit
- 2042: Demultiplexing unit
- 2043: Signal detection unit

## Claims

1. A communication apparatus for transmitting data using multiple frequency channels, the communication apparatus comprising:
a transmitter configured to transmit a radio frame by using the multiple frequency channels; and
a carrier sense unit configured to perform carrier sense using at least one of the multiple channels, wherein
in a case that the transmitter transmits the radio frame without using the at least one of the multiple channels on which the carrier sense is performed, at least a result of the carrier sense by the carrier sense unit indicates an idle state.

2. The communication apparatus according to claim 1, wherein
the at least one of the multiple channels on which the carrier sense is performed is an LBT channel, and
in a case that the carrier sense unit further determines that a channel other than the LBT channel is idle, the transmitter transmits the radio frame on the channel other than the LBT channel.

3. The communication apparatus according to claim 2, wherein
in a case that the carrier sense unit determines that the LBT channel is busy, the transmitter does not transmit the radio frame on the channel other than the LBT channel regardless of whether the channel other than the LBT channel is idle or busy.

4. The communication apparatus according to claim 1, wherein the at least one of the multiple channels on which the carrier sense is performed is configured in advance.

5. The communication apparatus according to claim 1, wherein
in a case that the transmitter transmits the radio frame on at least two of the multiple channels, the at least two of the multiple channels include the at least one of the multiple channels on which the carrier sense is performed.

6. The communication apparatus according to claim 1, wherein
in a case that the transmitter does not transmit the radio frame on the at least one of the multiple channels on which the carrier sense is performed, the transmitter transmits a resource reservation signal on the at least one of the multiple channels on which the carrier sense is performed.

7. The communication apparatus according to claim 1, wherein
the at least one of the multiple channels on which the carrier sense is performed is an LBT channel, and
in a case that the carrier sense unit determines that the LBT channel is busy, and in a case that a channel other than the LBT channel is determined to be idle in the carrier sense with a maximum contention window size, the transmitter transmits the radio frame on the channel other than the LBT channel.

8. The communication apparatus according to claim 1, wherein
the at least one of the multiple channels on which the carrier sense is performed is an LBT channel,
the transmitter divides the multiple channels into multiple channel groups,
each of the channel groups is configured with the LBT channel, and
in a case that the transmitter transmits the radio frame by using a channel other than the LBT channel, the channel being included in the channel group, at least a result of the carrier sense by the carrier sense unit for the LBT channel indicates the idle state

9. The communication apparatus according to claim 1, wherein
the carrier sense unit reserves, by the carrier sense, a frequency channel of the multiple frequency channels for a prescribed period of time, and
the prescribed period of time is shorter in a case that there is a possibility that the radio frame based on a second radio access technology other than a first radio access technology which the communication apparatus has is transmitted on at least one of the multiple channels, compared to a case that there is no possibility that the radio frame based on the second radio access technology is transmitted on the at least one of the multiple channels.

10. The communication apparatus according to claim 1, wherein
a maximum value of a period of time during which the carrier sense is performed is larger in a case that there is a possibility that the radio frame based on a second radio access technology other than a first radio access technology which the communication apparatus has is transmitted on at least one of the multiple channels, compared to a case that there is no possibility that the radio frame based on the second radio access technology is transmitted on the at least one of the multiple channels.

11. The communication apparatus according to claim 1, wherein
transmit power which the transmitter configures for the radio frame is lower in a case that there is a possibility that the radio frame based on a second radio access technology other than a first radio access technology which the communication apparatus has is transmitted on at least one of the multiple channels, compared to a case that there is no possibility that the radio frame based on the second radio access technology is transmitted on the at least one of the multiple channels.

12. A communication method for a communication apparatus for transmitting data using multiple frequency channels, the communication method comprising the steps of:
transmitting a radio frame by using the multiple frequency channels; and
performing carrier sense using at least one of the multiple channels, wherein
in a case that the step of transmitting the radio frame transmits the radio frame without using the at least one of the multiple channels on which the carrier sense is performed, at least a result of the carrier sense in the step of performing the carrier sense indicates an idle state.
